# DEMANDE DE BREVET EUROPEEN

(11) **EP 1 433 397 A1**
(43) Date de publication de la demande: **30.06.2004**
(21) Numéro de dépôt: 03292782.4
(22) Date de dépôt: 06.11.2003
(51) Int. Cl.: A44B 11/25

(54) **Ceinture de sécurité de véhicule automobile**

(30) Priorité: 08.11.2002 FR 0214008
(71) Demandeur: Renault s.a.s., 92100 Boulogne Billancourt (FR)
(72) Inventeur: Blumenfeld, Chanthao, 78990 Elancourt (FR); Francisco, Paulo, 91470 Forges Les Bains (FR); Malarde, Jean-Pierre, 78610 Le Perray en Yvelines (FR); Puyravaud, Christophe, 78330 Fontenay le Fleury (FR)

(57) **Abrégé**

La présente invention concerne une ceinture de sécurité de véhicule « automobile » du type comportant
- une sangle (10) dont la première extrémité est ancrée sur la structure de caisse du véhicule, et la deuxième extrémité est reliée à un enrouleur (16), cette sangle étant montée mobile entre une position de repos, dans laquelle elle est partiellement enroulée et vers laquelle elle est rappelée automatiquement par l'enrouleur (16), et une position d'utilisation le long du corps du passager du véhicule,
- un pêne (18) d'accrochage dont le corps coulisse le long de la sangle (10),
- une gâche (20) d'accrochage destinée à recevoir le pêne (18) en position d'utilisation et fixée à la structure de caisse du véhicule,
- et des moyens d'éclairage du pêne (18) et/ou de la gâche (20) pour faciliter l'engagement du pêne en vue de l'utilisation de la ceinture,
caractérisée en ce qu'il est prévu des moyens de détection du mouvement de la sangle (10) depuis sa position de repos, destinés à activer ou désactiver les moyens d'éclairage.

## Description

La présente invention concerne une ceinture de sécurité de véhicule.

Plus particulièrement, elle concerne une ceinture de sécurité du type comportant
- une sangle dont la première extrémité est ancrée sur la structure de caisse du véhicule, et dont la deuxième extrémité est reliée à un enrouleur, cette sangle étant montée mobile entre une position de repos, dans laquelle elle est partiellement enroulée et vers laquelle elle est rappelée automatiquement par l'enrouleur, et une position d'utilisation le long du corps du passager du véhicule,
- un pêne d'accrochage dont le corps coulisse le long de la sangle,
- une gâche d'accrochage destinée à recevoir le pêne en position d'utilisation et fixée à la structure de caisse du véhicule,
- des moyens d'éclairage du pêne et / ou de la gâche.

Actuellement le déclenchement des moyens d'éclairage des composants permettant le verrouillage ou le déverrouillage d'une ceinture de sécurité est subordonné à la survenue d'une condition telle que l'ouverture d'une porte du véhicule, comme cela est décrit dans le document DE-A-20010472, ou telle que l'allumage des feux ou des phares du véhicule.

Mais ces solutions ne sont pas satisfaisantes, car les conditions du déclenchement de l'allumage des moyens d'éclairage ne sont pas directement liées au besoin de l'utilisateur. Notamment, tous les moyens d'éclairage de toutes les ceintures sont activés simultanément, même si une seule personne est présente dans le véhicule, ce qui entraîne une consommation d'énergie inutile et une pollution lumineuse à l'intérieur de l'habitacle.

Pour résoudre ce problème, des systèmes d'affichage ont été intégrés au pêne de la ceinture de sécurité. Le document DE-C1-1029567 décrit une ceinture de sécurité dont le pêne comporte un moyen d'éclairage qui est activé par un bouton ou un interrupteur situé sur le pêne. Ce système présente l'avantage d'être utilisé uniquement lorsque le passager souhaite éclairer sa ceinture de sécurité afin de l'attacher plus facilement. Mais il demande à l'utilisateur une action supplémentaire, comme dans ce cas, l'appui sur l'interrupteur, lors de la préhension de la ceinture de sécurité. De plus, il nécessite qu'il y ait suffisamment de lumière dans l'habitacle pour que l'utilisateur trouve le pêne qui est généralement difficile d'accès et entouré par de nombreux éléments et aménagements de l'habitacle.

Pour obvier à ces inconvénients l'invention propose une ceinture de sécurité du type décrit précédemment, caractérisée en ce qu'il est prévu des moyens de détection du mouvement de la sangle depuis sa position de repos, destinés à activer ou désactiver les moyens d'éclairage.

Dans un mode de réalisation particulier, lesdits moyens détectent la variation du diamètre de l'enroulement de la sangle.

Selon un autre mode de réalisation, lesdits moyens détectent le défilement de la sangle de ceinture par rapport à un point fixe de la structure de caisse.

Selon un autre aspect de l'invention, lesdits moyens détectent la rotation de l'enrouleur.

Avantageusement la fonction d'éclairage de la gâche et / ou du pêne est autorisée ou inhibée en fonction de paramètres de fonctionnement ou d'utilisation du véhicule.

Selon un autre mode de réalisation, la fonction d'éclairage est inhibée après que le pêne ait été engagé dans la gâche.

Dans un autre exemple, la fonction d'éclairage est activée à nouveau lorsque le véhicule est arrêté, en vue de faciliter la libération du pêne.

Selon un autre mode de réalisation, la fonction éclairage est temporisée.

Selon un autre aspect de l'invention, la fonction éclairage est activée en cas de faible luminosité ou d'obscurité.

D'autres caractéristiques et avantages de l'invention apparaîtront à la lecture de la description détaillée qui suit, donnée uniquement à titre d'exemple, et pour la compréhension de laquelle on se reportera aux dessins annexés.

La figure 1 représente un schéma d'un mode de réalisation particulier d'une ceinture de sécurité objet de l'invention en position de repos.

La figure 2 représente un schéma de la ceinture de sécurité, utilisée par le passager pour être amenée en position d'utilisation.

La figure 3 est une vue d'un mode de réalisation particulier de l'invention.

La figure 4 est une vue d'un autre mode de réalisation particulier de l'invention.

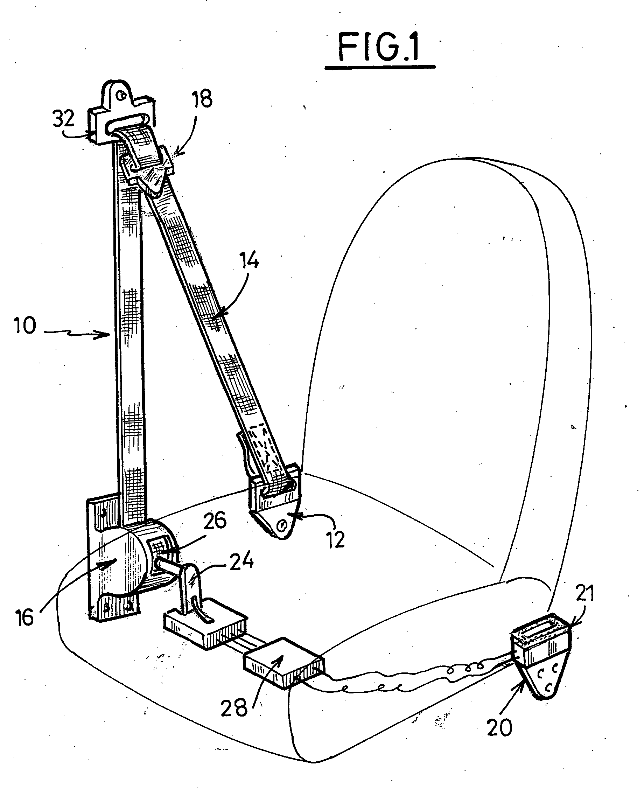

La figure 1 est une vue en perspective d'une ceinture de sécurité objet de l'invention, en position de repos. Cette ceinture comporte une sangle 10 dont une première extrémité est ancrée sur la structure de caisse du véhicule, par exemple sur le plancher, par un élément 12 permettant le déplacement angulaire du brin 14 ventral de la sangle 10 entre la position de repos et la position d'utilisation. La deuxième extrémité de la sangle 10 est reliée à un enrouleur 16 qui la rappelle automatiquement en position de repos, telle que représentée, dans laquelle elle est partiellement enroulée.

La ceinture de sécurité comprend aussi un pêne 18 dont le corps coulisse le long de la sangle, et est prévu pour s'engager dans une gâche d'accrochage 20 fixée à la structure de caisse du véhicule de façon à verrouiller ou « boucler » la ceinture en position d'utilisation. De manière connue, la gâche d'accrochage 20 comporte des moyens d'éclairage, telles que des diodes électroluminescentes, destinées à faciliter l'insertion du pêne. Ces diodes sont placées sous un couvercle translucide 21 qui laisse passer leur éclairage. Avantageusement, les moyens d'éclairage peuvent être intégrés au pêne et activés pour éclairer la zone entourant ce dernier. Ainsi lorsque l'utilisateur approche le pêne de l'endroit où se trouve la gâche, celle-ci est alors éclairée par les moyens contenus dans le pêne.

Conformément à l'invention, il est prévu des moyens pour détecter le mouvement de la sangle depuis sa position de repos, en vue d'activer ou de désactiver les moyens d'éclairage.

Ces moyens sont illustrés sur la figure 1, sous la forme d'un capteur 24 situé près de l'enrouleur. Par exemple, ce capteur 24 peut être mécanique, et changer d'état lorsque le rouleau 26 passe d'un diamètre maximum, lorsque la ceinture est en position de repos, à un diamètre inférieur, lorsque le passager utilise la ceinture. Le capteur 24 peut avantageusement être intégré au boîtier de l'enrouleur.

Ce moyen de détection est relié à une unité de pilotage 28 dont le rôle est d'inhiber ou d'activer le fonctionnement des moyens d'éclairage, en fonction de différentes stratégies de pilotage, détaillées ci-après. L'unité de pilotage 28 est reliée à plusieurs modules électroniques lui fournissant les informations nécessaires à la mis en oeuvre des stratégies de pilotage des moyens d'éclairage

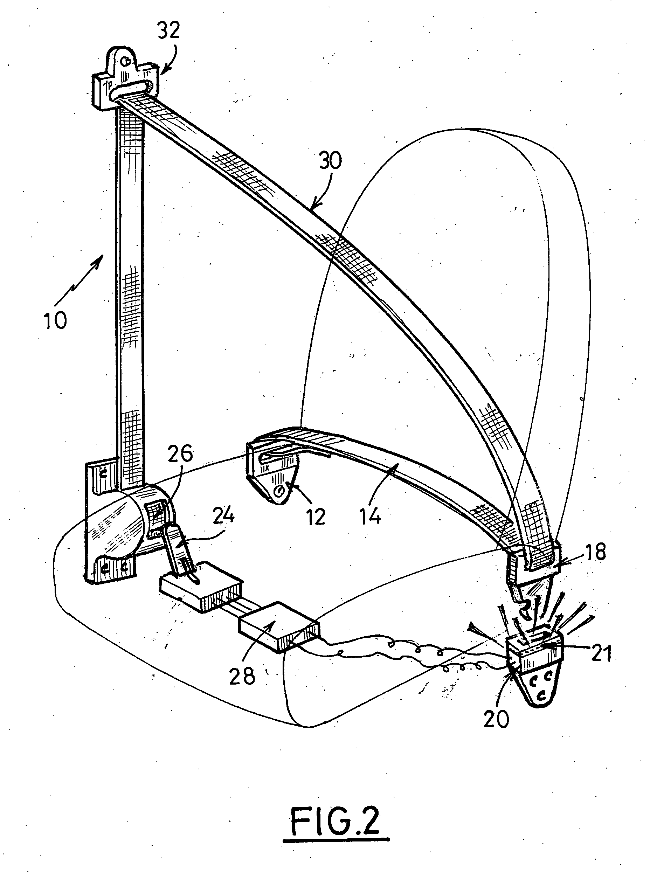

La figure 2 illustre un exemple de manipulation de la ceinture afin de la verrouiller en position d'utilisation. Dans cette position d'utilisation, la ceinture de sécurité 10 comporte en un brin ventral 14 qui s'étend sensiblement horizontalement devant le passager et un brin vertical 30 orienté en diagonale qui s'étend devant le torse du passager en direction d'un point supérieur de renvoi 32 de la sangle.

Pour mettre la ceinture en position d'utilisation, le passager saisit la sangle 10, et plus généralement le pêne 18 situé sur le côté caisse du véhicule en position haute et il tire le pêne 18 en direction de la gâche 20, afin de l'y engager. La préhension du pêne 18 est relativement aisée, même en l'absence de luminosité car il est alors situé dans une zone dégagée qui est , de plus, aisément mémorisé par l'utilisateur. Le pêne 18 coulisse alors le long de la sangle 10, pour permettre à l'utilisateur de choisir la longueur de la sangle voulue en position d'utilisation, tout en exerçant globalement une traction sur la sangle 10 qui provoque son déroulement plus ou moins important.

Lorsque l'utilisateur tire la sangle 10, le diamètre du rouleau 26 dans l'enrouleur diminue. Le capteur 24 détecte alors la variation du diamètre et cette variation va provoquer l'émission d'un signal par le capteur 24, qui va être transmis au boîtier de pilotage 28 des moyens d'éclairage, en vue de provoquer l'allumage des moyens d'éclairage intégrés à la gâche 20 associée à ce pêne 18 spécifique.

Différentes stratégies de pilotage permettent d'améliorer la ceinture objet de l'invention. Ces stratégies, pilotées à partir de l'unité de pilotage 28, enrichissent les prestations d'allumage des ceintures, notamment afin d'éviter la pollution lumineuse de l'habitacle.

Selon une première stratégie, les moyens d'éclairage sont désactivés dès que le pêne 18 est engagé dans la gâche 20. Pour cela la gâche 20 comporte un capteur et/ou un mécanisme de désactivation des moyens d'éclairage, connus de l'homme du métier.

Il peut aussi être envisagé de temporiser l'allumage des moyens d'éclairage, afin qu'ils s'éteignent automatiquement après écoulement d'un temps déterminé.

Selon une autre stratégie, l'activation ou la désactivation des moyens d'éclairage dépendent de paramètres de fonctionnement ou d'utilisation du véhicule, notamment l'état roulant ou arrêté du véhicule et/ou de la présence de la position de la clé de contact du véhicule. Afin de déterminer une stratégie, plusieurs paramètres peuvent être combinés, comme par exemple l'allumage des moyens d'éclairage lorsque le véhicule est à l'état arrêté, et que la clé est en position de contact pour mettre sous tension des équipements électriques du véhicules, tels que des moyens d'éclairage.

Après extinction des moyens d'allumage, ceux-ci peuvent être activés à nouveau, lorsque le véhicule passe d'un état moteur tournant à un état moteur arrêté, ce dernier état signifiant la fin d'un trajet et le besoin éventuel pour l'utilisateur de détacher la ceinture de sécurité.

Selon une autre stratégie, l'éclairage de la ceinture de sécurité dépend du niveau de luminosité existant. L'unité de pilotage 28 reçoit à cet effet des informations provenant d'un capteur de lumière, par exemple celui qui provoque l'allumage automatique des feux de croisement, et l'unité va alors autoriser l'allumage des moyens d'éclairement selon la valeur reçue du capteur.

Ces descriptions de stratégies ne sont nullement limitatives et n'ont été données qu'à titre d'exemple, pour illustrer au mieux l'invention. D'autres stratégies, permettant de gérer l'allumage des moyens d'éclairement, non décrites précédemment, peuvent être appliquée dans le cadre de la présente invention.

D'autre part, l'objet de l'invention peut comprendre différents types de capteurs prévus pour détecter le mouvement de la sangle.

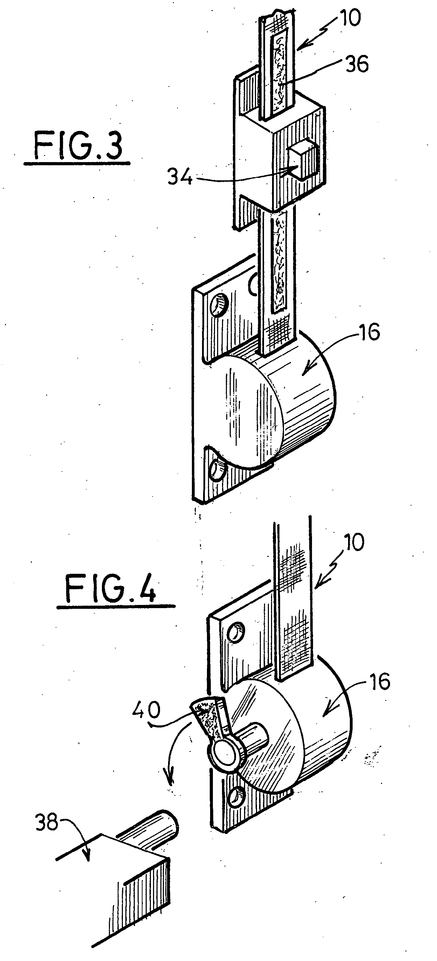

Dans un mode de réalisation particulier, tel que représenté à la figure 3, le capteur 34 détecte le défilement de la sangle 10. Ce capteur 34 est par exemple placé sur la structure de caisse, en regard de la sangle 20 de la ceinture de sécurité au repos, afin de pouvoir détecter, lorsque le passager utilise la ceinture, le défilement de celle-ci par réflexion d'un rayonnement optique. Il peut s'agir dans ce mode de réalisation, d'un capteur optique comportant une diode photo-réceptrice qui va recevoir, par réflexion d'une bande photo-émettrice 36 intégrée dans la sangle, des variations de niveau lumineux représentatives du défilement de la sangle.

Dans un autre mode de réalisation, tel que représenté à la figure 4, le capteur 38 détecte le mouvement de rotation de l'enrouleur 16. Intégré à ce dernier, ou fixé à proximité de celui-ci, lé capteur détecte la rotation de l'axe 40 l'enrouleur qui correspond de manière univoque à forcément un mouvement de la sangle.

Quel que soit le type de capteur, on peut prévoir que les signaux qu'il transmet à l'unité de pilotage 28 ne soient interprétés par cette dernière comme représentatifs d'un besoin d'éclairage, qu'après un défilement de longueur déterminée de manière à éviter un allumage intempestif par exemple lorsque, en position d'utilisation, l'utilisateur se penche ou tire sur la ceinture pour desserrer l'étreinte.

Les résultats obtenus de la présente invention varieront selon la sensibilité des capteurs et les stratégies adoptées.

## Revendications

1. Ceinture de sécurité de véhicule « automobile » du type comportant
- une sangle (10) dont la première extrémité est ancrée sur la structure de caisse du véhicule, et la deuxième extrémité est reliée à un enrouleur (16), cette sangle étant montée mobile entre une position de repos, dans laquelle elle est partiellement enroulée et vers laquelle elle est rappelée automatiquement par l'enrouleur (16), et une position d'utilisation le long du corps du passager du véhicule,
- un pêne (18) d'accrochage dont le corps coulisse le long de la sangle (10),
- une gâche (20) d'accrochage destinée à recevoir le pêne (18) en position d'utilisation et fixée à la structure de caisse du véhicule,
- et des moyens d'éclairage du pêne (18) et/ou de la gâche (20) pour faciliter l'engagement du pêne en vue de l'utilisation de la ceinture,
**caractérisée en ce qu'**il est prévu des moyens de détection du mouvement de la sangle (10) depuis sa position de repos, destinés à activer ou désactiver les moyens d'éclairage.

2. Ceinture de sécurité selon la revendication 1, **caractérisée en ce** lesdits moyens détectent la variation du diamètre de l'enroulement de la sangle (10).

3. Ceinture de sécurité selon la revendication 1 **caractérisée en ce que** ce lesdits moyens détectent le défilement de la sangle (10) de ceinture par rapport à un point fixe de la structure de caisse.

4. Ceinture selon la revendication 1, **caractérisée en ce que** ce lesdits moyens détectent la rotation de l'enrouleur (16).

5. Procédé de commande des moyens d'éclairage d'une ceinture selon l'une des revendications précédentes , **caractérisé en ce que** la fonction d'éclairage de la gâche et/ou du pêne est activée ou inhibée en fonction de paramètres de fonctionnement ou d'utilisation du véhicule.

6. Procédé de commande d'une ceinture selon la revendication précédente, **caractérisé en ce que** la fonction éclairage est inhibée après que le pêne (18) ait été engagé dans la gâche.

7. Procédé de commande d'une ceinture selon les revendications 5 et 6 , **caractérisé en ce que** la fonction éclairage est réactivée lorsque le véhicule est arrêté, en vue de faciliter la libération du pêne (18).

8. Procédé de commande d'une ceinture selon les revendications 5 à 7, **caractérisé en ce que** la fonction éclairage est temporisée.

9. Procédé de commande d'une ceinture selon les revendications 5 à 9, **caractérisé en ce que** la fonction éclairage est activée en cas de faible luminosité ou d'obscurité.
